# EUROPEAN PATENT SPECIFICATION

(11) **EP 0 920 803 B1**
(45) Date of publication and mention of the grant of the patent: **23.07.2003**
(21) Application number: 98830715.3
(22) Date of filing: 30.11.1998
(51) Int. Cl.: A01N 35/02

(54) **Disinfectant composition comprising glutaraldehyde and phenolic compounds**
Desinfektionsmittel auf Basis phenolischer Wirkkomponenten und Glutaraldehyd
Composition désinfectante à base de glutaraldehyde et de composés phénoliques

(30) Priority: 04.12.1997 IT RM970750; 14.10.1998 IT RM980644
(43) Date of publication of application: 09.06.1999
(73) Proprietor: Affaitati, Pietro, 00041 Albano RM (IT)
(72) Inventor: Affaitati, Pietro, 00041 Albano RM (IT)
(74) Representative: Tonon, Gilberto

(56) References cited:
- EP-A- 0 255 875
- EP-A- 0 279 704
- DE-A- 4 317 844
- GB-A- 1 472 410
- US-A- 4 103 001
- CHEMICAL ABSTRACTS, vol. 121, no. 16, 17 October 1994 Columbus, Ohio, US; abstract no. 182435, IWADARE, YASUHIKO ET AL: "Solutions for soft contact lenses and cleaning and sterilization of soft contact lenses using the same" XP002096707 & JP 06 118355 A (SEIKO EPSON CORP., JAPAN)

## Description

The subject of the present invention is a disinfectant composition containing, besides phenol and glutaraldehyde, other phenols substituted in para, meta and ortho positions. The chemical nature and the concentration of the substituted phenols allows to obtain, apart from other advantages, a ready for use disinfectant, thus significantly simplifying the application modalities of the same disinfectant.

As it is known, the market offers disinfectants based on the association of phenol with glutaraldehyde, their effectiveness being due to the synergism between the bactericidal action of the phenol, particularly on Mycobacterium tuberculosis, and the sporicidal action of the glutaraldehyde.

The adoption of the aforementioned disinfectant compositions has evidenced the need of formulations with an high concentration of active principles in order to maintain the required activity at dilutions up to 1:16.

However, this need entails several disadvantages, among which deserve special attention the ones hereinafter:
- foul odour of the solutions (in the usage dilutions as well)
- dangerousness of the solutions, as the TLV is bordering the toxicity limits (in the working dilutions as well).

Apart from those relevant disadvantages from an environmental and cost-effective point of view, attention must also be drawn to another drawback. Owing to the different pH values wherein the two active principles are stable and active, the phenol solution must be kept separated from the glutaraldehyde solution until use. This need, introducing evident complications in the application modalities, has the effect of limiting the conventional disinfectant versatility.

EP-A-0279704 discloses a disinfectant composition containing glutaraldehyde and phenol. DE 4317844A1 discloses a disinfectant composition containing glutaraldehyde and 2-phenyl-phenol and/or p-chloro-m-cresol. EP-A-0255875 discloses a disinfectant composition, comprising glutaraldehyde, alkyl-, aryl-, or halogen-substituted phenol or thiobisphenol, and a nonionic surface-active agent, with good biocide activity at pH values in the range 3,5-5. US-A-4103001 teaches the use of a buffering agent to obtain a glutaraldehyde-phenol disinfectant composition stable at basic pH-ranges.

The adoption of the composition according to the invention allows to overcome all the aforementioned drawbacks, further showing other advantages that shall be clear hereinafter.

The disinfectant composition according to the present invention comprises, in addition to phenol and glutaraldehyde, other phenols substituted in ortho, meta and para position, whose chemical nature and concentration thereof allows to obtain a disinfectant composition ready for use in its condition as such, thus simplifying the application modalities of the disinfectant.

Therefore, subject of the present invention is a disinfectant composition comprising phenol and glutaraldehyde, characterised in that it is ready for use in its condition as such, in that it has the composition hereinafter expressed in percent by weight:

| | |
|---|---|
| p-chloro-m-cresol | from 0.075 to 4.000; |
| o-phenyl-phenol | from 0.005 to 0.260; |
| phenol | from 0.100 to 5.600; |
| glutaraldehyde | from 0.450 to 19.500; |

isopropanol and propylene glycol sufficient to dissolve o-phenyl-phenol in water;
up to 30% of at least one additive selected from the group comprising buffers, antioxidants, surfactants, sequestering agents and an activator, the complement to 100 being water, in that it possesses a pH comprised in the range 5-8 and in that the percent by weight of glutaraldehyde is higher than the sum of the percents by weight of the three phenolic components, the activator having the composition hereinafter, expressed in percent by weight:
- sodium tetraborate ≤ 10;
- disodium edetate from 0.01 to 10;
- optionally, caustic soda (NaOH) in an amount sufficient to ensure a pH within the 7.5-10 interval;
- the complement to 100 being water.

Preferably, the ratio between the percent by weight of the glutaraldehyde and the sum of the percents by weight of the three phenolic components is comprised within the range 1.5-2.5.

The most relevant advantages associated to the presence of phenolic derivatives in the composition of the disinfectant composition can be summarised in the way hereinafter:
- reduction of the phenol concentration so as to pass from C to Xn (phenol from over 8% to 4.9%) according to the law on dangerous products labelling;
- bactericidal action being equal, less environmental risks for the disposal of the acid components of the disinfectant composition;
- one solution for the phenols and the glutaraldehyde; and
- possibility of having a "ready for use" dilution up to 1:40.

The activity of the disinfectant composition according to the invention justifies its use as steriliser and disinfectant, in cold and of high level, of endoscopes, optical fibres instruments, surgical instruments and in general thermolabile materials. The composition can be employed in open vessels, endoscope washers or in ultrasound vessels.

In cases wherein a very rapid bactericidal and sporicidal action is needed, or for purely economical reasons, the use of an activator might prove necessary to activate the disinfectant composition according to the invention.

The activator according to the invention has the composition hereinafter expressed as percentage in weight:
- sodium tetraborate ≤ 10
- disodium edetate from 0.001 to 10
- optionally, caustic soda (NaOH) in an amount sufficient to ensure a pH within the 7.5-10 range,
- the complement to 100 being water.

So far, only a general description of the present invention was given. With the aid of the examples hereinafter, a more detailed description will now be given of its embodiments, directed towards making its objects, features, advantages and application modalities better understood.

### EXAMPLE 1

### Preparation of a ready for use disinfectant composition according to the invention

In a 5-litres container approximately 4 litres of water deionized and purified with inverse osmosis and UV are measured. The amounts of propylene glycol and isopropanol provided for in the Master Formula are added. It is stirred until clear solution (at least 10 minutes). p-chloro-m-cresol, o-phenyl-phenol and 91% phenol are added. It is stirred again until clear solution (at least 60 minutes). Then 50% glutaraldehyde is added. It is stirred for 30 minutes. EDTA, benzotriazol, perfume are added and it is brought to volume (4.5 litres) with purified water. After checking that its pH is 5.5 (possible corrections shall be carried out with 6N sodium hydroxide or 3.5% hydrochloric acid solutions), it is stirred again for 60 minutes.

The 4.5 litres of the disinfectant solution thus prepared comprise:
- p-chloro-m-cresol 3.375 g
- o-phenyl-phenol 0.225 g
- 91% phenol 5.000 g
- 50% glutaraldehyde 40.500 g
- isopropanol 13.500 ml
- propylene glycol 45.000 g
- disodium edetate 1.800 g
- benzotriazol 0.900 g
- perfume 0.225 g
- purified water as needed to 4.500 l

The solution thus prepared has a validity of two years from the production date and does not require dilution for its use.

The bactericidal activity was determined with the methods set by the Comité Européen de Normalisation (CEN TC 216) in this specific sector, as resulting from the listing hereinafter:
1. Basic bacterial activity. Method followed: prEN 1040 CEN/TC 216
2. Basic bacterial activity (tuberculicidal activity).
   Method followed: modified prEN 1040 CEN/TC 216
3. Basic fungicidal activity. Method followed: prEN-Test method 1275
4. Quantitative suspension test for evaluation of bactericidal activity of chemical disinfectants.
   Method followed: prEN 1276 CEN/TC 216.
5. Quantitative suspension test for evaluation of fungicidal activity of chemical disinfectants.
   Method followed: prEN-Test method 1650
6. Surface Test Method
   Method followed: CEN/TC 216/HWG/TG Surface N.8
7. Test for sporicidal activity.
   Methods followed: AFNOR NF T 72:230 and 190.
8. Quantitative suspension test for the evaluation of virucidal activity of chemical disinfectants.
   Method followed: CEN/TC 216/WG 3 N 48.

In case of disinfection of a surgical lancet the used modalities are the following: insert the instrument, after having washed and dried it; check that the disinfectant solution seeps through all cavities; pick up the instrument with an aseptic methodology and rinse it with sterile water.

The contact time for the sterilisation is comprised between 3 and 10 hours. For an high level disinfection the contact time is of 15 minutes, even in cases wherein the presence of Mycobacterium Tuberculosis, polio 1, Type A influence, HBV, HIV is suspected.

### EXAMPLE 2

### Preparation of a composition according to the invention that provides for the use of the activator

### Preparation of the disinfectant composition

In a 5-litres container are measured approximately 800 ml of water deionized and purified with reverse osmosis and UV. 1350 g propylene glycol and 450 ml isopropanol are added. It is stirred until clear solution (at least 15 minutes). 90 g p-chloro-m-cresol, 4.5 g o-phenyl-phenol and 138.4 g 91% phenol are added. It is stirred again until clear solution (at least 60 minutes). Then 855 g 50% glutaraldehyde are added and it is stirred for 30 minutes. 2.2 g perfume are added and it is taken to volume (4.5 litres) with purified water. After checking that its pH is comprised between 3.5 and 4.5 it is stirred again for 60 minutes.

The 4.5 litres of the resulting disinfectant composition, having a validity of two years from the production date comprise:
- p-chloro-m-cresol 90.0 g
- o-phenyl-phenol 4.5 g
- 91% phenol 138.5 g
- 50% glutaraldehyde 855.0 g
- isopropanol 450.0 ml
- propylene glycol 1350.0 g
- perfume 2.2 g
- purified water as needed to 4.5 l

### Preparation of the activator

In a 1-litre container approximately 400 ml of purified water are poured. 22.5 g of sodium tetraborate and 18 g disodium edetate are added. It is stirred until clear solution is obtained (at least 30 min). It is brought to volume (0.5 l) with purified water and is stirred again for 15 minutes. Its pH is checked to be comprised between 9 and 10, carrying out minor adjustments with 6N NaOH if needed.

The solution thus obtained comprises in a standard volume of 0.5 litres the components disclosed hereinafter::
- sodium tetraborate decahydrate 2 5.5 g
- disodium edetate 18.0 g
- NaOH as needed to reach a pH of 10 ± 0.5
- purified water as needed to 0.5 l.

At the moment of use the disinfectant composition is mixed with the activator composition and is diluted 20 or 40 times with water, depending on the desired rapidity of the bactericidal action.. The presence of sodium edetate prevents the possibility of inconveniences due to the hardness of the dilution water. The activated solution has a validity of 30 days.

The bactericidal activity was determined with the same methods already mentioned in example 1.

In the case of disinfection of a surgical lancet, the modalities to follow are the ones hereinafter: insert the instrument, after having washed and dried it; check that the disinfectant solution seeps through all cavities; pick up the instrument with an aseptic methodology and rinse it with sterile water.

The contact time for the chemical sterilisation (sporicidal action) is comprised between 3 and 10 hours, depending on the performed dilution. For an high level disinfection the contact time is of 15 minutes, even in cases wherein the presence of Mycobacterium Tuberculosis, polio 1, Type A influence, HBV, HIV is suspected.

### EXAMPLE 3

A disinfectant composition was prepared according to the invention comprising the components hereinafter expressed as percent by weight:

| | |
|---|---|
| p chloro-m-cresol | 0.03 |
| o-phenyl-phenol | 0.40 |
| phenol | 0.57 |
| glutaraldehyde | 1.50 |
| propylene glycol | 50 |
| isopropanol | 10 |
| disodium edetate | 0.40 |
| perfume | 0.05 |
| water | as needed to 100. |

This composition, with a ratio between the percent by weight of the glutaraldehyde and the sum of the percents by weight of the phenolic components equal to 1.5, was subjected - as such and at a 1:10 dilution in water - to the CEN TC/216 methods to highlight the sporicidal, bactericidal, fungicidal and virucidal activities.

The product as such proved to be active for the contact times hereinafter:

| | |
|---|---|
| sporicidal activity | 3 hours |
| bactericidal activity | 10 minutes |
| fungicidal activity | 10 minutes |
| virucidal activity | 10 minutes. |

With a 1:10 dilution thereof, the product proved to be active for the contact times hereinafter:

| | |
|---|---|
| sporicidal activity | 6 hours |
| bactericidal activity | 15 minutes |
| fungicidal activity | 15 minutes |
| virucidal activity | 15 minutes. |

Adopting instead a disinfectant composition differing from the one according to the invention in that it comprises 1% glutaraldehyde (ratio between the percent of glutaraldehyde and the sum of the percents of the phenolic components equal to 1) unsatisfactory results are obtained. In fact, in the case of the adoption of the product as such, sporicidal activity times are of more than 10 hours, while in the case of 1:10 dilution sporicidal activity is undetectable. The bactericidal, fungicidal and virucidal activities - depending on the dilutions - vary from 10 minutes to over 60 minutes.

### EXAMPLE 4

A disinfectant composition is prepared according to the invention comprising the components hereinafter expressed as percent by weight:

| | |
|---|---|
| p chloro-m-cresol | 0.03 |
| o-phenyl-phenol | 0.40 |
| phenol | 0.57 |
| glutaraldehyde | 2.50 |
| propylene glycol | 55 |
| isopropanol | 10 |
| disodium edetate | 0.40 |
| perfume | 0.05 |
| water | as needed to 100. |

This composition, with a ratio between the percent by weight of the glutaraldehyde and the sum of the percents by weight of the phenolic components equal to 2.5, underwent - as such and at a 1:10 dilution in water - to the CEN TC/216 methods to highlight the sporicidal, bactericidal, fungicidal and virucidal activities.

The product as such proved to be active for the contact times hereinafter:

| | |
|---|---|
| sporicidal activity | 1 hour |
| bactericidal activity | 10 minutes |
| fungicidal activity | 10 minutes |
| virucidal activity | 10 minutes. |

With a 1:10 dilution thereof, the product proved to be active for the contact times hereinafter:

| | |
|---|---|
| sporicidal activity | 4 hours |
| bactericidal activity | 15 minutes |
| fungicidal activity | 15 minutes |
| virucidal activity | 15 minutes. |

Adopting instead a disinfectant composition differing from the one according to the invention in that it comprises 0.5% glutaraldehyde (ratio between the percent of glutaraldehyde and the sum of the percents of the phenolic components equal to 0.5) clearly inferior results are obtained. In fact, in the case of the adoption of the product as such, sporicidal activity times are of more than 10 hours, while in the case of 1:10 dilution sporicidal activity is undetectable. The bactericidal, fungicidal and virucidal activities - depending on the dilutions - vary from 10 minutes to over one hour.

## Claims

1. A disinfectant composition comprising phenol and glutaraldehyde, **characterised in that** it is ready for use in its condition as such, **in that** it has the composition hereinafter expressed as percent by weight:
| | |
|---|---|
| p-chloro-m-cresol | from 0.075 to 4.000; |
| o-phenyl-phenol | from 0.005 to 0.260; |
| phenol | from 0.100 to 5.600; |
| glutaraldehyde | from 0.450 to 19.500; |
isopropanol and propylene glycol sufficient to dissolve o-phenyl-phenol in water;
up to 30% of at least one additive selected from the group comprising buffers, antioxidants, surfactants, sequestering agents and an activator, the complement to 100 being water, **in that** it possesses a pH comprised in the range 5-8 and **in that** the percent by weight of glutaraldehyde is higher than the sum of the percents by weight of the three phenolic components, the activator having the composition thereinafter expressed in percent by weight:
- sodium tetraborate ≤ 10;
- disodium edetate from 0.01 to 10;
- optionally, caustic soda (NaOH) in an amount sufficient to ensure a pH within the 7.5-10 interval;
- the complement to 100 being water.

2. The disinfectant composition as per claim 1, in which the ratio between the percent by weight of the glutaraldehyde and the sum of the percents by weight of the three phenolic components is comprised within the range 1.5-2.5.

3. An activator for the disinfectant composition of claim 1 or 2, **characterised in that** it has the composition hereinafter, expressed as percent by weight:
- sodium tetraborate ≤ 10;
- disodium edetate from 0.01 to 10;
- optionally, caustic soda (NaOH) in an amount sufficient to ensure a pH within the 7.5-10 interval,
- the complement to 100 being water.

## Patentansprüche

1. Desinfektionsmittelzusammensetzung, umfassend Phenol und Glutaraldehyd, **dadurch gekennzeichnet, dass** sie in ihrem Zustand als solche gebrauchsfertig ist, dass sie die nachstehend als Gewichtsprozent angegebene Zusammensetzung aufweist:
| | |
|---|---|
| p-Chlor-m-cresol | 0,075 bis 4,000; |
| o-Phenylphenol | 0,005 bis 0,260; |
| Phenol | 0,100 bis 5,600; |
| Glutaraldehyd | 0,450 bis 19,500; |
Isopropanol und Propylenglycol in einer ausreichenden Menge zum Auflösen von o-Phenylphenol in Wasser;
bis zu 30 % von wenigstens einem Additiv, ausgewählt aus der Gruppe umfassend Puffer, Antioxrdationsmittet, oberflächenaktive Stoffe, Maskierungsmittel und einen Aktivator, wobei der Rest bis 100 Wasser ist, dass sie einen pH im Bereich von 5-8 besitzt und dass der Gewichtsprozentsatz von Glutaraldehyd höher ist als die Summe der Gewichtsprozentsätze der drei phenolischen Komponenten, wobei der Aktivator die nachstehend in Gewichtsprozent angegebene Zusammensetzung aufweist:
- Natriumtetraborat ≤ 10;
- Dinatriumethylendiamintetraacetat 0,01 bis 10;
- gegebenenfalls Ätznatron (NaOH) in einer Menge, die ausreicht, um einen pH im Intervall von 7,5-10 zu gewährleisten,
- wobei der Rest bis 100 Wasser ist.

2. Desinfektionsmittelzusammensetzung nach Anspruch 1, in welcher das Verhältnis zwischen dem Gewichtsprozentsatz des Glutaraldehyds und der Summe der Gewichtsprozentsätze der drei phenolischen Komponenten im Bereich von 1,5-2,5 liegt.

3. Aktivator für die Desinfektionsmittelzusammensetzung nach Anspruch 1 oder 2, **dadurch gekennzeichnet, dass** er die nachstehende Zusammensetzung, angegeben als Gewichtsprozent, aufweist;
- Natriumtetraborat ≤ 10;
- Dinatriumethylendiamintetraacetat 0,01 bis 10;
- gegebenenfalls Ätznatron (NaOH) in einer Menge, die ausreicht, um einen pH im Intervall von 7,5-10 zu gewährleisten,
- wobei der Rest bis 100 Wasser ist.

## Revendications

1. Composition désinfectante comprenant du phénol et du glutaraldéhyde, **caractérisée en ce qu'**elle est prête à l'emploi dans son état tel quel, **en ce qu'**elle présente la composition ci-après, exprimée en pourcentage en poids:
| | |
|---|---|
| p-chloro-m-crésol | de 0,075 à 4,000; |
| o-phényl-phénol | de 0,005 à 0,260; |
| phénol | de 0,100 à 5,600; |
| glutaraldéhyde | de 0,450 à 19,500; |
isopropanol et propylène-glycol en quantité suffisante pour dissoudre l'o-phényl-phénol dans l'eau;
jusqu'à 30 % d'au moins un additif choisi dans le groupe comprenant des tampons, antioxydants, agents tensioactifs, agents chélateurs et un activateur, le complément à 100 étant de l'eau, **en ce qu'**elle possède un pH compris dans la plage 5-8 et **en ce que** le pourcentage en poids de glutaraldéhyde est supérieur à la somme des pourcentages en poids des trois composante phénoliques, l'activateur ayant la composition ci-après, exprimée en pourcentage en poids :
- tétraborate de sodium ≤ 10;
- édétate disodique de 0,01 à 1.0;
- facultativement, soude caustique (NaoH) dans une quantité suffisante pour assurer un pH dans la plage de 7,5-10;
- le complément à 100 étant de l'eau.

2. Composition désinfectante selon la revendication 1, dans laquelle le rapport entre le pourcentage en poids du glutaraldéhyde et la somme des pourcentages en poids des trois composants phénoliques est compris dans la plage de 1,5-2,5.

3. Activateur pour la composition désinfectante selon la revendication 1 ou 2, **caractérisé en ce qu'**il présente la composition ci-après, exprimée en pourcentage en poids:
- tétraborate de sodium ≤ 10;
- édétate disodique de 0,01 à 10;
- facultativement, soude caustique (NaOH) dans une quantité suffisante pour assurer un pH dans la plage de 7,5-10,
- le complément à 100 étant de l'eau.
